# EUROPÄISCHE PATENTSCHRIFT

(11) **EP 1 430 250 B1**
(45) Veröffentlichungstag und Bekanntmachung des Hinweises auf die Patenterteilung: **29.12.2004**
(21) Anmeldenummer: 02777044.5
(22) Anmeldetag: 09.09.2002
(51) Int. Cl.: F16M 13/04

(54) **ENTKOPPELTER GEWICHTSAUSGLEICH FÜR EINE KAMERA-BALANCE-VORRICHTUNG**
DECOUPLED WEIGHT COMPENSATION SYSTEM FOR A CAMERA BALANCE-DEVICE
EQUILIBRAGE DE POIDS DISSOCIE DESTINE A UN DISPOSITIF D'EQUILIBRAGE DE CAMERA

(30) Priorität: 13.09.2001 DE 10145197
(43) Veröffentlichungstag der Anmeldung: 23.06.2004
(73) Patentinhaber: Sachtler GmbH & Co. KG, 85716 Unterschleissheim (DE)
(72) Erfinder: SCHALLER, Curt, O., 81541 München (DE)
(74) Vertreter: HOFFMANN EITLE
(86) Internationale Anmeldenummer: PCT/EP2002/010094
(87) Internationale Veröffentlichungsnummer: WO 2003/023273

(56) Entgegenhaltungen:
- WO-A-99/41540
- WO-A-02/081962
- US-A- 4 474 439
- US-A- 4 976 387

## Beschreibung

### Technisches Gebiet

Die Erfindung betrifft eine Kamera-Balance-Vorrichtung gemäß dem Oberbegriff des Patentanspruchs 1.

Solche Kamera-Balance-Vorrichtungen dienen zum Ausbalancieren von Video- und Filmkameras, die von einem Kameramann manuell geführt werden und dabei über eine Aufhängevorrichtung beispielsweise mit einem Federarm einer westenartigen Tragvorrichtung (sog. Körperstativ) verbunden sind, die ihrerseits am Körper des Kameramanns befestigt wird.

Die Aufhängevorrichtung soll dabei verhindern, dass sich Neige- und Kippbewegungen, Schwingungen und Schrittbewegungen von dem Körper des Kameramanns auf die Kamera übertragen, denn es sollte stets eine gleichbleibende Ausrichtung der Kamera gewährleistet und ein Neigen, Kippen oder Schwingen der Kamera vermieden werden. Alternativ kann die Kamera mittels der Aufhängevorrichtung auch an einem Standstativ, Dolly, Kran o.ä. befestigt werden, wobei die Aufhängevorrichtung dann verhindern kann, dass sich beispielsweise Unebenheiten des Untergrunds auf die Lage der Kamera auswirken.

Dazu ist die Aufhängevorrichtung so ausgestaltet, dass der Aufbau aus Kamera und Balance-Vorrichtung bezüglich des Stativs eine Pendelbewegung ausführen kann. Dieser Aufbau ist darüber hinaus mit Kontergewichten verbunden. Bei geeigneter Wahl und Positionierung dieser Kontergewichte wird die Kamera so ausbalanciert, dass sich Neige- und Kippbewegungen, Schwingungen und Schrittbewegungen nicht von dem Körperstativ, Standstativ, Dolly oder Kran auf die Kamera übertragen.

### Stand der Technik

Eine bekannten Kamera-Balance-Vorrichtung Kamera-Balance-Vorrichtung weist einen kardanisch aufhängbaren, zumindest teilweise im wesentlichen geraden Pendelarm auf, an dem einerseits der kardanischen Aufhängung eine Kamerabefestigungseinrichtung und andererseits der kardanischen Aufhängung eine veränderbare Befestigungseinrichtung für Kontergewichte vorgesehen ist. Als Kontergewichte werden beispielsweise Akkus verwendet, die gleichzeitig als Energiespeicher dienen.

Die kardanische Aufhängevorrichtung ist ihrerseits beispielsweise an einem Federarm eines Körperstativs, einem Stativ, Dolly oder Kran befestigbar.

In der bekannten Kamera-Balance-Vorrichtung sind die Kontergewichte insgesamt lageveränderbar, um das Gesamtsystem aus Kameraaufbau, Pendelarm und Kontergewichten abhängig von den jeweiligen Verhältnissen, d.h. beispielsweise abhängig von Gewicht und Schwerpunktlage der verwendeten Kamera, ausbalancieren zu können.

US 4,474,439 zeigt eine solche Kamera-Balance-Vorrichtung, wobei ein Monitor, eine Batterie und weitere elektronische Bauteile als Kontergewichte eingesetzt werden, die zum Teil unabhängig voneinander an dem Pendelarm verschiebbar oder bezüglich des Pendelarms schwenkbar sind.

### Darstellung der Erfindung

Die Aufgabe der vorliegenden Erfindung besteht darin, eine Kamera-Balance-Vorrichtung mit vielseitigerer Balanceeinstellung zu schaffen.

Diese Aufgabe wird gelöst durch eine Kamera-Balance-Vorrichtung gemäß dem Patentanspruch 1.

Demzufolge kann an verschiedenen Stellen und in verschiedenen Ebenen eine Verstellung der Lage der Gewichte vorgenommen werden.

Vorteilhafte Weiterbildungen der erfindungsgemäßen Kamera-Balance-Vorrichtung ergeben sich aus den Unteransprüchen.

Vorzugsweise ist die Kamerabefestigungseinrichtung an einem Ende des Pendelarms vorgesehen und zumindest eine Befestigungseinrichtung für Kontergewichte an dem anderen Ende der Pendelarms.

In einer besonders vorteilhaften Ausgestaltung der erfindungsgemäßen Kamera-Balance-Vorrichtung ist an dem Pendelarm eine Befestigungseinrichtung für einen Monitor vorgesehen. Diese Befestigungseinrichtung für den Monitor kann auf derjenigen Seite der kardanischen Aufhängungvorgesehen sein, auf der sich auch zumindest eine Befestigungseinrichtung für Kontergewichte befindet. Ebenso kann sich die Befestigungseinrichtung für einen Monitor auf der Seite der kardanischen Aufhängung befinden, auf der auch die Kamerabefestigungsvorrichtung vorgesehen ist, und eine Befestigungseinrichtung für Kontergewichte kann auf der anderen Seite der kardanischen Aufhängung vorgesehen sein.

Dabei kann eine Befestigungseinrichtung für Kontergewichte direkt an der Befestigungseinrichtung für den Monitor vorgesehen sein. Dadurch ist es insbesondere möglich, verschiedene Monitore zu befestigen und trotzdem gute Balancemöglichkeiten zur Verfügung zu haben. Häufig werden schwere Röhrenmonitore verwendet, die allerdings sehr teuer sind. Mit der erfindungsgemäßen Ausgestaltung besteht nun die Möglichkeit, auch leichtere (Flach-)Monitore einzusetzen, ohne dass die Möglichkeit verloren geht, das System tatsächlich hinsichtlich der Balance vollständig perfekt auszugleichen. Dies ist insbesondere dann möglich, wenn man an verschiedenen Stellen Kontergewichte, beispielsweise in Form von Akkus, Monitoren oder weiterem Kamerazubehör, anbringen und lageverändern kann.

Bei den Gleitelementen kann es sich beispielsweise um Gleitrohre handeln, ebenso um Gleitprofile, beispielsweise Vierkantprofile.

Zumindest eine der Trägerplatten ist in zumindest zwei Orientierungen an den Gleitelementen anbringbar, d.h. beispielsweise in einer ersten Orientierung und in einer zweiten Orientierung, in der sie bezüglich der ersten Orientierung um 180° gewendet ist. In einer bevorzugten Ausgestaltung weist diese Trägerplatten dann eine asymmetrische Verlängerung auf, so dass sich abhängig von der Orientierung eine veränderte Schwerpunktslage eines an der Trägerplatte angebrachten Kontergewichts bezüglich der Längsachse dem Pendelarm ergibt.

Die Gleitelemente können einen festen Winkel, beispielsweise einen rechten Winkel, mit dem Pendelarm bilden oder auch verschwenkbar, insbesondere stufenlos verschwenkbar, und arretierbar bezüglich des Pendelarms gelagert sein.

Zumindest eine der Trägerplatten kann bezüglich der Gleitrohre schwenkbar angeordnet sein, so dass die Trägerplatten und somit die Kontergewichte verschwenkt werden können, was weitere Variationsmöglichkeiten bei der Balance-Einstellung bietet. Insbesondere ist es so möglich, eine Trägerplatte so zu verschwenken, dass sie als virtuelle Verlängerung des Pendelarms dient. Alternativ oder zusätzlich kann zumindest eine der Trägerplatten auch schwenkbar bezüglich einer weiteren gelagert sein, so dass beispielsweise die Möglichkeit besteht, eine Trägerplatte lediglich verschiebbar bezüglich des Gleitelements vorzusehen und eine zweite Trägerplatte schwenkbar an dieser ersten Trägerplatte zu lagern.

In einer vorteilhaften Weiterbildung der Erfindung sind zumindest zwei der vorhandenen Befestigungseinrichtungen für Kontergewichte identisch ausgestaltet. So kann beispielsweise in der Ausführungsform mit Trägerplatten jede Trägerplatte wahlweise an einem der vorhandenen Gleitelemente angebracht bzw. davon entfernt werden; aufgrund der identischen Ausgestaltung der Befestigungseinrichtungen sind die Kontergewichte an alle identischen Befestigungseinrichtungen austauschbar anbringbar.

Die Kontergewichte können beispielsweise über eine Klemmoder Clipverbindung an den Befestigungseinrichtungen bzw. den Trägerplatten anbringbar sein. Denkbar ist jedoch auch jede andere lösbare Befestigungsmöglichkeit.

Schließlich können zumindest zwei der Befestigungseinrichtungen für Monitore, Kontergewichte etc. so schwenkbar und/oder verschiebbar ausgestaltet sein, dass die Schwerpunkte von daran angebrachten Monitoren und Kontergewichten (Akkus o.ä.) auf gleicher Höhe des Pendelarms angeordnet werden können. Dies minimiert die durch die Kontergewichte und Monitore erzeugte Unwucht.

### Kurze Beschreibung der Zeichnungen

Im folgenden wird die Erfindung anhand beispielhaft in den Zeichnungen dargestellten Ausführungsformen genauer erläutert.

Im einzelnen zeigen:
- Fig. 1: eine Gesamtansicht eines Kamera-Balancesystems samt einer kardanischen Aufhängevorrichtung und zwei erfindungsgemäßen Befestigungseinrichtungen für Augleichsgewichte;
- Fig. 2a-c: eine Detailansicht der erfindungsgemäßen Befestigungseinrichtungen für Kontergewichte; und
- Fig. 3a,b: eine Detailansicht einer zweiten Ausführungsform von erfindungsgemäßen Befestigungseinrichtungen für Kontergewichte.

### Ausführliche Beschreibung von bevorzugten Ausführungsformen

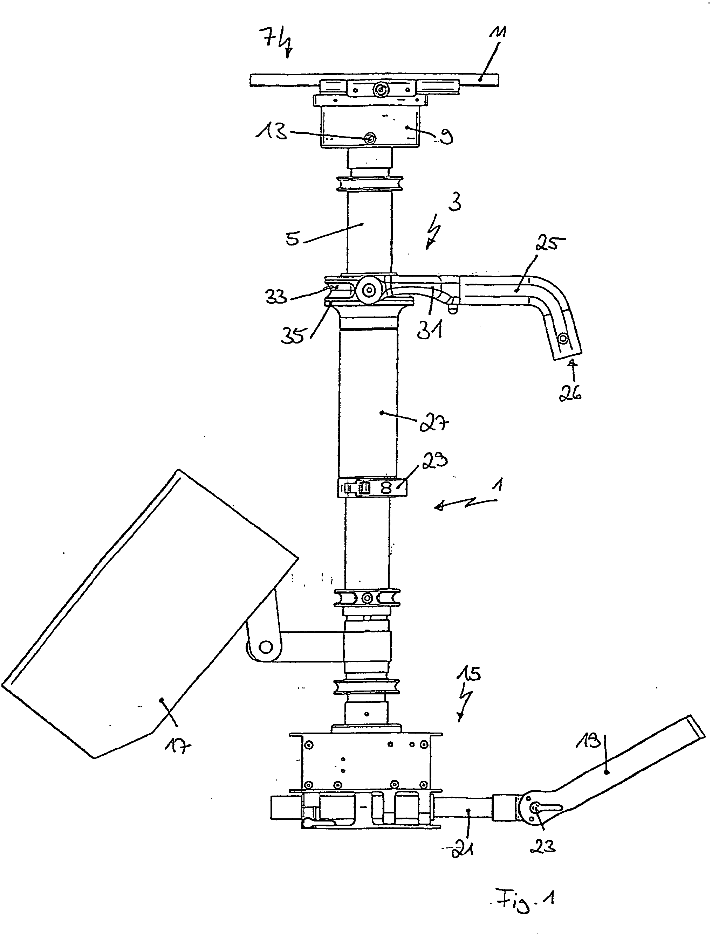

Die Fig. 1 zeigt eine Kamera-Balance-Vorrichtung 1 samt einer kardanischen Aufhängevorrichtung 3 und einer Aufnahmevorrichtung 15 für Kontergewichte mit zwei Befestigungseinrichtungen 17, 19.

Die Kamera-Balance-Vorrichtung weist einen Pendelarm in Form eines Pendelrohrs 5 auf. Am oberen Ende des Pendelrohrs 5 befindet sich eine Kamera-Befestigungsvorrichtung 7, die im Wesentlichen aus einer Basis 9 und einer Halteplatte 11 besteht, auf der eine Kamera anbringbar ist, wobei die Halteplatte 11 bezüglich der Basis 9 über Stellschrauben 13 (von denen hier nur eine sichtbar ist) verschiebbar ist, und zwar in die Zeichenebene der Fig. 1 hinein bzw. aus dieser Ebene heraus. Weitere Stellschrauben (nicht dargestellt) sind vorgesehen, um die Halteplatte 11 bezüglich der Basis 9 nach rechts und links in Fig. 1 zu bewegen. Am unteren Ende des Pendelrohrs 5 befindet sich eine Aufnahmevorrichtung 15 für Kontergewichte. In dieser Ausführungsform sind eine Monitor-Halterung 17 vorgesehen sowie eine Trägerplatte 19 zur Aufnahme von Kontergewichten, die beispielsweise durch Akkumulatoren gebildet werden. Die Trägerplatte 19 ist an Gleitrohren 21 (von denen nur eins sichtbar ist) verschiebbar und fixierbar angebracht und ist außerdem schwenkbar bezüglich des Gleitrohrs 21; die Arretierung der Trägerplatte 19 in der gewünschten Winkelstellung erfolgt mittels eines Klemmhebels 23.

Der Aufbau aus Pendelrohr 5, Kamera-Haltevorrichtung 7 und Aufnahmevorrichtung 15 für Kontergewichte ist in einer Aufhängevorrichtung 3 kardanisch aufgehängt. Diese Aufhängevorrichtung 3 weist einen ersten Handgriff 25 als gelenkeingangsseitiges Befestigungselement und einen zweiten Handgriff 27 als gelenkausgangsseitiges Befestigungselement auf. Der erste Handgriff 25 dient zur Anbringung der Aufhängevorrichtung an einem Stativ, insbesondere an einem Federarm eines Körperstativs, das von einem Kameramann getragen wird. Dazu weist der gelenkeingangsseitige Handgriff eine Bohrung 26 auf, mittels derer er auf einen Zapfen eines Standstativs oder einen Federarm einer Weste aufgesetzt werden kann. Der zweite Handgriff 27 dient zur Anbringung der Aufhängevorrichtung 3 an der Kamera-Balance-Vorrichtung 1. Dazu ist der zweite Handgriff 27 rohrförmig ausgestaltet und um das Pendelrohr 5 der Kamera-Balance-Vorrichtung 1 herum angeordnet, so dass er bezüglich des Pendelrohrs 5 verschiebbar ist. Die Arretierung des zweiten Handgriffs 27 bezüglich des Pendelrohrs 5 erfolgt über eine Klemmeinrichtung 29.

Mittels der beiden Handgriffe 25, 27 kann ein Kameramann den mittels des ersten Handgriffs 25 beispielsweise an einem Federarm eines Körperstativs, einem Standstativ, Dolly oder Kran befestigten Aufbau beidhändig führen.

In der gelenkigen Verbindung zwischen dem ersten Handgriff 25 und dem zweiten Handgriff 27 sind drei Bewegungsachsen realisiert: Der erste Handgriff 25 ist mit einem Gabelelement 31 so verbunden, dass er bezüglich dieses Gabelelements 31 um eine Drehachse drehbar ist, die der Längsachse eines geraden, in Fig. 1 waagerecht verlaufenden Abschnitts des ersten Handgriffs 25 entspricht. Das Gabelelement 31 ist seinerseits um eine waagerechte Gelenkachse (erste Kardanachse) schwenkbar mit einem Gelenk-Außenring 33 verbunden. Dieser Gelenk-Außenring 33 ist seinerseits um eine vertikale Gelenkachse (zweite Kardanachse) herum drehbar mit einem Gelenk-Innenring 35 gekoppelt, der seinerseits fest mit dem zweiten Handgriff 27 verbunden ist, der über die Klemmeinrichtung 29 an dem Pendelrohr 5 der Kamera-Balance-Vorrichtung 1 befestigt wird. Somit ist-der erste Handgriff 25, der mit dem Stativ verbindbar ist, bezüglich des mit dem Pendelrohr 5 verbundenen zweiten Handgriffs 27 um die Drehachse drehbar, um die waagerechte Gelenkachse schwenkbar und um die vertikale Gelenkachse drehbar gelagert.

Mittels der gelenkigen Aufhängevorrichtung 3 soll verhindert werden, dass sich Bewegungen des Stativs, beispielsweise des Körperstativs, auf die an der Halteplatte 11 angebrachte Kamera übertragen. Dazu muss der Aufbau aus Pendelrohr 5, Kamera-Haltevorrichtung 7 und Kontergewichten an der Aufnahmevorrichtung 15 balanceausgeglichen positioniert sein. Um diesen Balanceausgleich insbesondere auch für verschiedene Kameratypen mit unterschiedlichem Gewicht und unterschiedlicher Schwerpunktlage realisieren zu können, verfügt die Kamera-Balance-Vorrichtung 1 über eine Vielzahl von Einstellmöglichkeiten. Insbesondere wird die Balance des Systems durch das Vorsehen von unterschiedlich schweren Kontergewichten an der Aufnahmevorrichtung 15 erzielt.

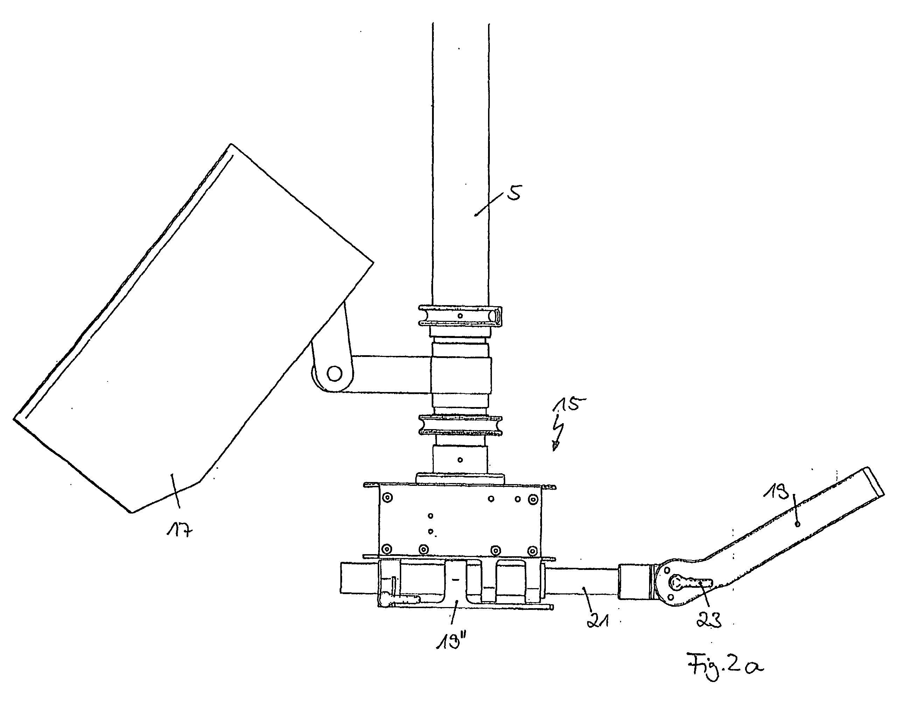

Aus Fig. 2 a-c ist ersichtlich, dass dazu in dieser Ausführungsform eine Befestigungseinrichtung 17 für einen Monitor sowie zwei Trägerplatten 19, 19" für Kontergewichte vorgesehen sind. Wie oben bereits erwähnt, ist die eine Trägerplatte 19 für Kontergewichte an Gleitrohren 21, von denen nur eins sichtbar ist, schwenkbar und verschiebbar gelagert, wobei die Arretierung in einer gewünschten Winkelstellung mittels des Klemmhebels 23 geschieht. Die Gleitrohre 21 liegen hier rechtwinklig zu dem Pendelarm 5.

Ebenso ist die Monitor-Haltevorrichtung 17 schwenkbar und verschiebbar gelagert.

Die Fig. 2 a-c zeigen dazu drei verschiedene Winkelstellungen der Trägerplatte 19 und zwei verschiedene Stellungen der Monitor-Haltevorrichtung 17. In der in Fig. 2b gezeigten Stellung ist die Trägerplatte 19 weit nach oben verschwenkt, und die Monitor-Haltevorrichtung ist gegenüber der in Fig. 2a gezeigten Stellung nach unten verschwenkt. In dieser Position können die Schwerpunkte eines an der Haltevorrichtung 17 angebrachten Monitors und eines an der Trägerplatte 19 angebrachten Kontergewichts auf gleicher Höhe bezüglich der Pendelstange 5 liegen, wie es durch die Strichpunktlinie in Fig. 2b angeordnet ist. So kann in dieser Position die erzeugte Unwucht minimiert werden. In Fig. 2c ist die Trägerplatte 19 dagegen weit nach unten verschwenkt. In diesem Fall trägt die Trägerplatte 19 zur wirksamen Länge des Pendelarms 5 bei. Durch die Verschwenkbarkeit der Trägerplatte 19 kann so der Pendelarm 5 virtuell verlängert werden, so dass eventuell auf eine Teleskopierbarkeit des Pendelarms 5 verzichtet werden kann.

Die Trägerplatte 19" ist ihrerseits ebenfalls auf die Gleitrohre 21 aufsteckbar. Dabei ist die Trägerplatte 19" so asymmetrisch verlängert, dass ein im wesentlichen mittig an der Trägerplatte 19" angebrachtes Kontergewicht sich in der in Fig. 2a und 2b dargestellten Anbringposition der Trägerplatte 19" direkt unterhalb des Pendelarms 5 befindet. Der Schwerpunkt des an der Trägerplatte 19" angebrachten Kontergewichts liegt dann im Wesentlichen auf der Längsachse des Pendelarms 5.

Setzt man die Trägerplatte 19" jedoch um 180° verdreht auf die Gleitrohre 21 auf, so erstreckt sich die Verlängerung der Trägerplatte 19" weg von dem Pendelarm 5, wie es in Fig. 2c gezeigt ist, und der Schwerpunkt eines daran angebrachten Kontergewichts ist beabstandet von der Längsachse des Pendelarms 5. In diesem Fall wird von dem an der Trägerplatte 19" befestigten Kontergewicht ein Moment erzeugt, das dazu verwendet werden kann, reduzierte Gewichte an anderen Stellen der Vorrichtung zu kompensieren. Insbesondere besteht die Möglichkeit, ein beispielsweise durch den Austausch eines schweren gegen einen leichten Monitor reduziertes Gewicht auf der Trägerplatte 19 durch das beschriebene umgekehrte Aufstecken der Trägerplatte 19" zu kompensieren.

Die in Fig. 2a-c dargestellte Ausführungsform weist als Aufnahmevorrichtung 15 für Kontergewichte die Monitor-Halterung 17 und zwei Trägerplatten 19, 19" auf; ebenso ist es selbstverständlich denkbar, an verschiedenen Stellen des Pendelrohrs 5 weitere Anbringmöglichkeiten für Kontergewichte vorzusehen. Insbesondere ist es denkbar, direkt an der Monitor-Halterung 17 eine Anbringmöglichkeit für Kontergewichte vorzusehen, um verschiedene Monitorgewichte direkt durch Kontergewichte kompensieren zu können.

Wie oben ebenfalls bereits erwähnt, kann außerdem mittels der Stellschrauben 13 der Schwerpunkt der auf der Halteplatte 11 befindlichen Kamera (nicht dargestellt) bezüglich der mit dem Pendelrohr 5 verbundenen Basis 9 verschoben werden. Ein noch flexibleres System entsteht, wenn das Pendelrohr 5 teleskopierbar ausgestaltet wird.

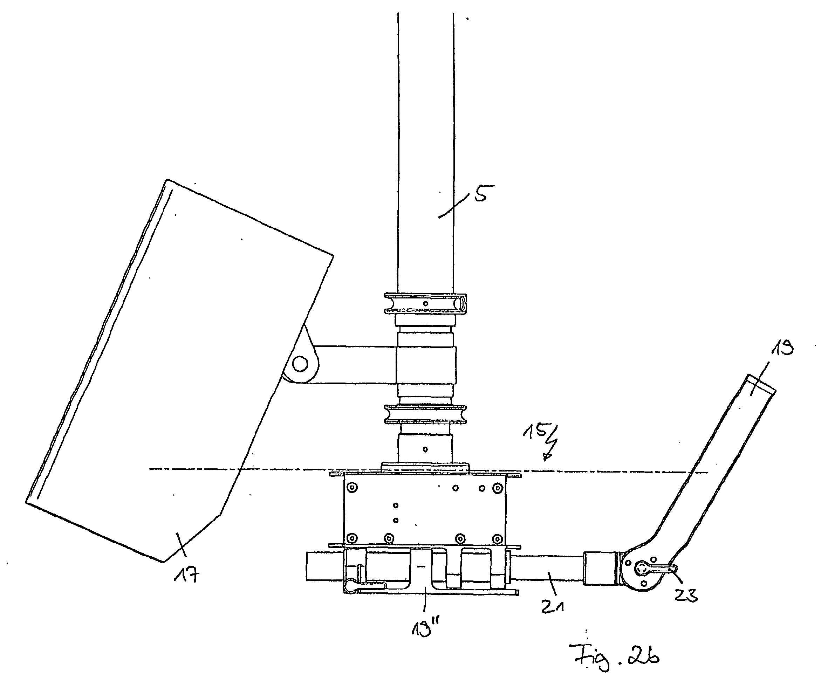

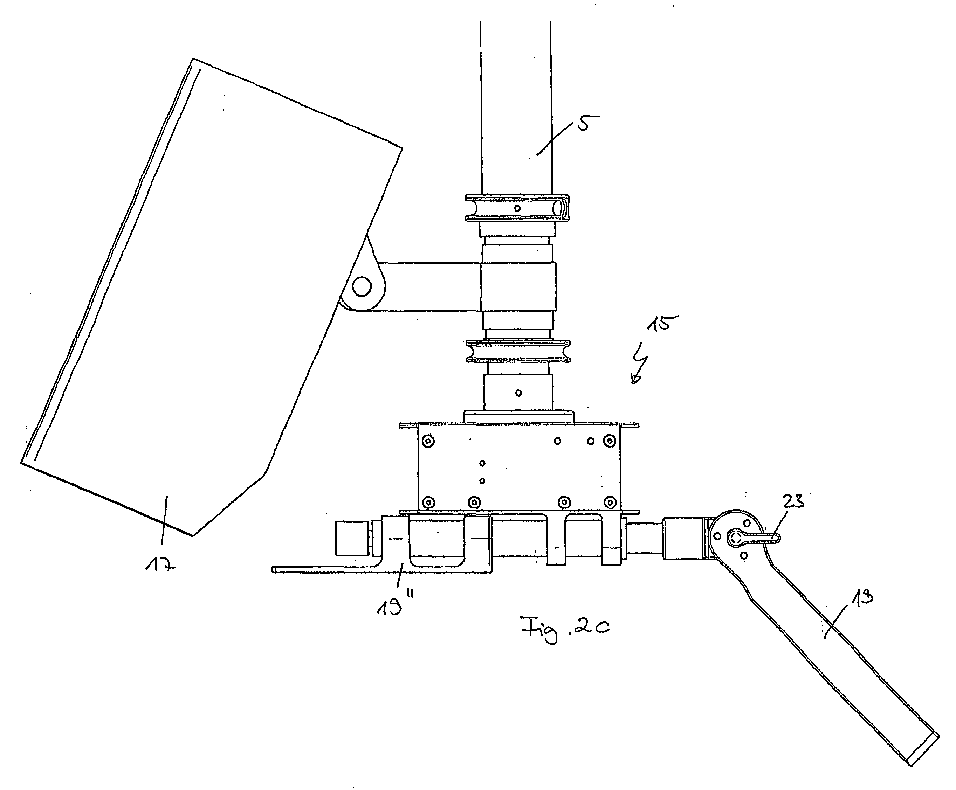

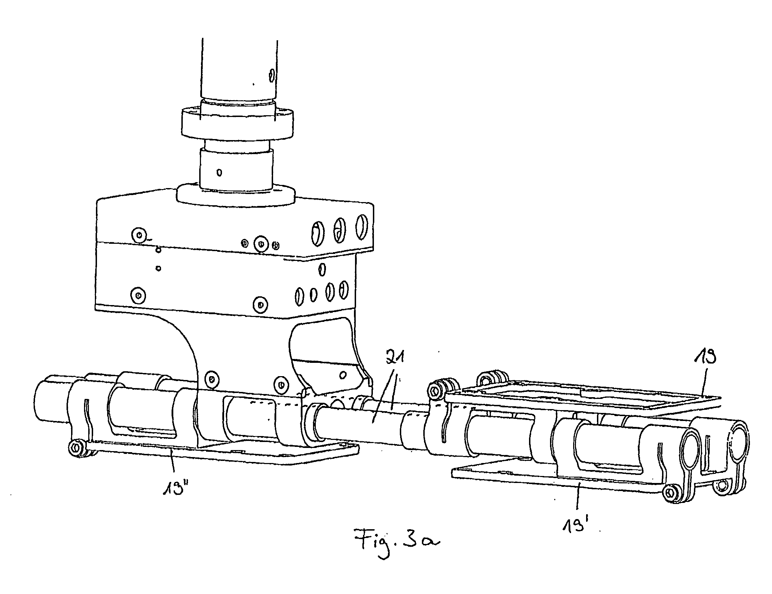

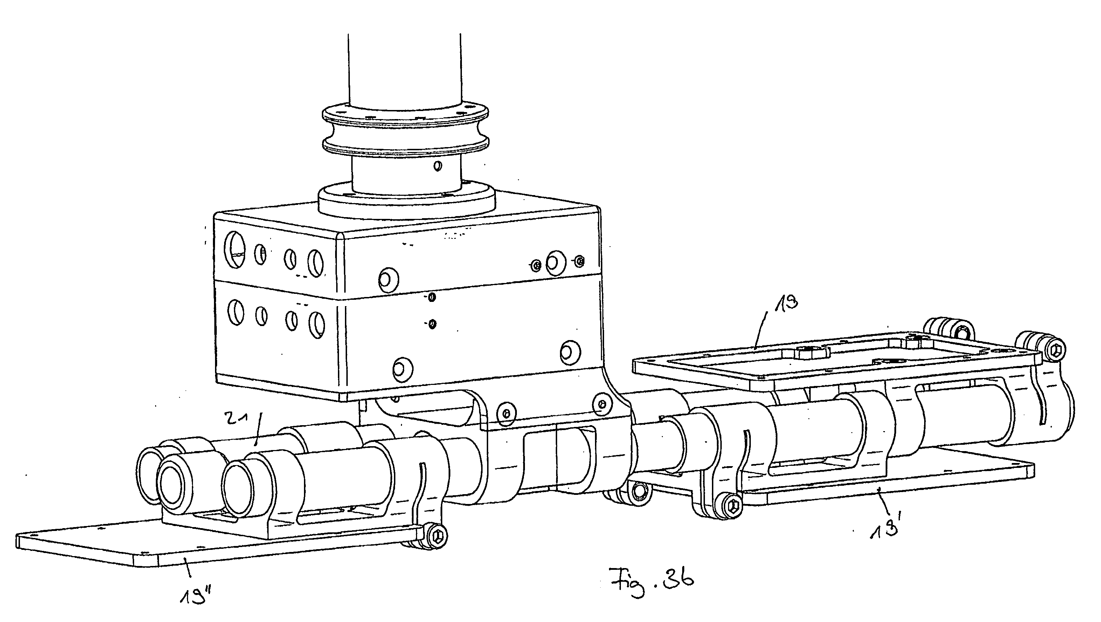

Die Fig. 3a und 3b zeigen eine zweite Ausführungsform von erfindungsgemäßen Befestigungseinrichtungen. In dieser Ausführungsform sind drei Trägerplatten 19, 19', 19" zur Anbringung von Kontergewichten vorgesehen. Alle drei Trägerplatten 19, 19', 19" sind identisch ausgestaltet und verschiebbar und fixierbar an zwei Gleitrohren 21 gelagert. Aufgrund der identischen Ausgestaltung aller drei Trägerplatten 19, 19', 19" können die Trägerplatten beliebig variabel aufgesteckt und entfernt sowie gegeneinander ausgetauscht werden. Dies ist aus einem Vergleich der Anordnungen in Fig. 3a und 3b ersichtlich: gegenüber der Anordnung in Fig. 3a ist die Trägerplatte 19" in Fig. 3b um 180° verdreht angebracht, um den Schwerpunkt eines daran angebrachten Kontergewichts von der Längsachse des Pendelarms 5 weg zu verschieben und so die bereits mit Bezug auf Fig. 2 beschriebene Unwuchtminimierung herbeizuführen. Außerdem sind auch die Trägerplatten 19, 19' in Fig. 3b bezüglich Fig. 3a um 180° verdreht angebracht. Dies hat im dargestellten Fall zwar keinen Einfluss auf die Gewichtsverhältnisse, verdeutlicht aber die Austauschbarkeit der vorhandenen Trägerplatten 19, 19' und 19". Falls nicht alle drei Trägerplatten 19, 19', 19" gleichzeitig benötigt werden, können diese schnell und einfach demontiert werden. An allen drei Trägerplatten 19, 19', 19" lassen sich Kontergewichte beispielsweise mittels einer Clipverbindung befestigen.

Auch in der zweiten Ausführungsform kann eine zusätzliche Halterung für einen Monitor vorgesehen sein, entsprechend der Halterung 17 in Fig. 2.

## Patentansprüche

1. Kamera-Balance-Vorrichtung (1) mit einem kardanisch aufhängbaren, zumindest teilweise im wesentlichen geraden Pendelarm (5), an dem einerseits der kardanischen Aufhängung (3) eine Kamerabefestigungseinrichtung (7) und andererseits der kardanischen Aufhängung (3) zumindest zwei Befestigungseinrichtungen (17, 19) für Kontergewichte unabhängig voneinander ortsveränderbar vorgesehen sind,
**dadurch gekennzeichnet, dass**
zumindest eine der Befestigungseinrichtungen zumindest eine Trägerplatte (19, 19', 19") aufweist, die auf Gleitelemente (21) aufsteckbar und daran verschiebbar angeordnet ist, welche ihrerseits an dem Pendelarm (5) angebracht sind, wobei zumindest eine Trägerplatte (19, 19', 19") in zumindest zwei Orientierungen an den Gleitelementen (21) anbringbar und asymmetrisch verlängert ist, so dass sich abhängig von der Orientierung der Trägerplatte (19, 19', 19") bezüglich der Gleitelemente (21) eine unterschiedliche Ausrichtung der an der Trägerplatte (19, 19', 19") angebrachten Kontergewichte bezüglich des Pendelarms (5) ergibt, und dass zumindest eine Trägerplatte (19, 19', 19") schwenkbar bezüglich der Gleitelemente (21) und/oder schwenkbar bezüglich einer weiteren Trägerplatte (19, 19', 19") gelagert ist.

2. Kamera-Balance-Vorrichtung (1) nach Anspruch 1, **dadurch gekennzeichnet, dass** die Kamerabefestigungseinrichtung (7) an einem Ende des Pendelarms (5) vorgesehen ist.

3. Kamera-Balance-Vorrichtung (1) nach Anspruch 1 oder 2, **dadurch gekennzeichnet, dass** zumindest eine Befestigungseinrichtung (17, 19, 19', 19") für Kontergewichte an einem Ende des Pendelarms (5) vorgesehen ist.

4. Kamera-Balance-Vorrichtung (1) nach einem der vorangehenden Ansprüche, **dadurch gekennzeichnet, dass** die Kamerabefestigungseinrichtung (7) und zumindest eine Befestigungseinrichtung (17, 19, 19', 19") für Kontergewichte an gegenüberliegenden Enden des Pendelarms (5) vorgesehen sind.

5. Kamera-Balance-Vorrichtung (1) nach einem der vorangehenden Ansprüche, **dadurch gekennzeichnet, dass** an des Pendelarms (5) eine Befestigungseinrichtung (17) für einen Monitor vorgesehen ist.

6. Kamera-Balance-Vorrichtung (1) nach Anspruch 5, **dadurch gekennzeichnet, dass** die Befestigungseinrichtung (17) für den Monitor auf derjenigen Seite der kardanischen Aufhängung (3) vorgesehen ist, auf der sich auch zumindest eine Befestigungseinrichtung (19, 19', 19") für Kontergewichte befindet.

7. Kamera-Balance-Vorrichtung (1) nach einem der Ansprüche 1 bis 4, **dadurch gekennzeichnet, dass** die - Befestigungseinrichtung (17) für den Monitor und zumindest eine Befestigungseinrichtung (19, 19', 19") für Kontergewichte auf verschiedenen Seiten der kardanischen Aufhängung (3) vorgesehen sind.

8. Kamera-Balance-Vorrichtung (1) nach Anspruch 7, **dadurch gekennzeichnet, dass** die Befestigungseinrichtung (17) für den Monitor auf derjenigen Seite der kardanischen Aufhängung (3) vorgesehen ist, auf der sich auch die Kamerabefestigungsvorrichtung (7) befindet.

9. Kamera-Balance-Vorrichtung (1) nach einem der Ansprüche 5 bis 8, **dadurch gekennzeichnet, dass** an der Befestigungseinrichtung (17) für den Monitor eine Befestigungseinrichtung für Kontergewichte vorgesehen ist.

10. Kamera-Balance-Vorrichtung (1) nach einem der vorangehenden Ansprüche, **dadurch gekennzeichnet, dass** die Kontergewichte in Form von elektrischen Akkumulatoren vorliegen.

11. Kamera-Balance-Vorrichtung (1) nach Anspruch 1, **dadurch gekennzeichnet, dass** die Gleitelemente (21) in Form von Gleitrohren vorliegen.

12. Kamera-Balance-Vorrichtung (1) nach Anspruch 1, **dadurch gekennzeichnet, dass** die Gleitelemente (21) in Form von Profilen, beispielsweise von Vierkantprofilen, vorliegen.

13. Kamera-Balance-Vorrichtung (1) nach einem der vorangehenden Ansprüche, **dadurch gekennzeichnet, dass** die Gleitelemente (21) in einem festen Winkel bezüglich des Pendelarms (5) angeordnet sind.

14. Kamera-Balance-Vorrichtung (1) nach Anspruch 13, **dadurch gekennzeichnet, dass** die Gleitelemente (21) senkrecht zum Pendelarm (5) verlaufen.

15. Kamera-Balance-Vorrichtung (1) nach einem der Ansprüche 1 bis 12, **dadurch gekennzeichnet, dass** der Winkel zwischen der Trägerplatte (19) und dem Pendelarm (5) verstellbar, insbesondere stufenlos verstellbar, ist.

16. Kamera-Balance-Vorrichtung (1) nach einem der vorangehenden Ansprüche, **dadurch gekennzeichnet, dass** zumindest zwei der vorhandenen Befestigungseinrichtungen (17, 19, 19', 19") für Kontergewichte identisch ausgestaltet sind.

17. Kamera-Balance-Vorrichtung (1) nach einem der vorangehenden Ansprüche, **dadurch gekennzeichnet, dass** die Kontergewichte über eine Klemm- oder Clipverbindung an den Befestigungseinrichtungen (17, 19) anbringbar sind.

18. Kamera-Balance-Vorrichtung (1) nach einem der vorangehenden Ansprüche, **dadurch gekennzeichnet, dass** zumindest zwei der Befestigungseinrichtungen (17, 19, 19', 19") so verschwenkbar und/oder verschiebbar angeordnet sind, dass die Schwerpunkte von daran angebrachten Kontergewichten bzw. Monitoren auf einer Höhe des Pendelarms (5) anordenbar sind.

## Claims

1. Cameral balancing apparatus (1) with a pendulum arm (5), which can be suspended on gimbals and is at least partially substantially straight, on which on one side of the gimbal suspension (3) a camera mounting device (7) and on the other side of the gimbal suspension (3) at least two mounting devices (17, 19) for counterweights are provided as changeable in position and independent of one another, **characterised in that** at least one of the mounting devices has at least one carrier plate (19, 19', 19"), arranged as placeable on sliding elements (21) and being movable thereon, the sliding elements on their part being attached to the pendulum arm (5) and at least one carrier plate (19, 19', 19") being attachable to the sliding elements (21) in at least two orientations and asymmetrically lengthened, so, depending on the orientation of the carrier plate (19, 19', 19") in respect of the sliding elements (21), a different alignment of the counterweights attached to the carrier plate (19, 19', 19") in respect of the pendulum arm (5) results and at least one carrier plate (19, 19', 19") is held as swivellable in respect of the sliding elements (21) and/or swivellable in respect of a further carrier plate (19, 19', 19").

2. Camera balancing apparatus (1) according to claim 1, **characterised in that** the camera mounting device (7) is provided on one end of the pendulum arm (5).

3. Camera balancing apparatus (1) according to claim 1 or 2, **characterised in that** at least one mounting device (17, 19, 19', 19") for counterweights is provided at one end of the pendulum arm (5).

4. Camera balancing apparatus (1) according to one of the preceding claims, **characterised in that** the camera mounting device (7) and at least one mounting device (17, 19, 19', 19") for counterweights are provided on opposite ends of the pendulum arm (5).

5. Camera balancing apparatus (1) according to one of the preceding claims, **characterised in that** a mounting device (17) for a monitor is provided on the pendulum arm (5).

6. Camera balancing apparatus (1) according to claim 5, **characterised in that** the mounting device (17) for the monitor is provided on the side of the gimbal suspension (3) on which there is also at least one mounting device (19, 19', 19") for counterweights.

7. Camera balancing apparatus (1) according to one of claims 1 to 4, **characterised in that** the mounting device (17) for the monitor and at least one mounting device (19, 19', 19") for counterweights are provided on different sides of the gimbal suspension (3).

8. Camera balancing apparatus (1) according to claim 7, **characterised in that** the mounting device (17) for the monitor is provided on the side of the gimbal suspension (3) on which the camera mounting device (7) is also located.

9. Camera balancing apparatus (1) according to one of claims 5 to 8, **characterised in that** a mounting device for counterweights is provided on the mounting device (17) for the monitor.

10. Camera balancing apparatus (1) according to one of the preceding claims, **characterised in that** the counterweights are in the form of electrical accumulators.

11. Camera balancing apparatus (1) according to claim 1, **characterised in that** the sliding elements (21) are in the form of sliding tubes.

12. Camera balancing apparatus (1) according to claim 1, **characterised in that** the sliding elements (21) are in the form of profiles, for example square profiles.

13. Camera balancing apparatus (1) according to one of the preceding claims, **characterised in that** the sliding elements (21) are arranged at a fixed angle in respect of the pendulum arm (5).

14. Camera balancing apparatus (1) according to claim 13, **characterised in that** the sliding elements (21) run perpendicular to the pendulum arm (5).

15. Camera balancing apparatus (1) according to one of claims 1 to 12, **characterised in that** the angle between the carrier plate (19) and the pendulum arm (5) is adjustable, in particular continuously adjustable.

16. Camera balancing apparatus (1) according to one of the preceding claims, **characterised in that** at least two of the mounting devices (17, 19, 19', 19") present for counterweights are identically configured.

17. Camera balancing apparatus (1) according to one of the preceding claims, **characterised in that** the counterweights are attachable to the mounting devices (17, 19) via a clamping or clip connection.

18. Camera balancing apparatus (1) according to one of the preceding claims, **characterised in that** at least two of the mounting devices (17, 19, 19', 19") are arranged as swivellable and/or movable in such a way that the centres of gravity of counterweights or monitors attached thereto can be arranged at a height of the pendulum arm (5).

## Revendications

1. Dispositif (1) d'équilibrage du poids pour une caméra, comportant un bras pendulaire (5) au moins partiellement rectiligne, qui peut être suspendu selon une suspension à la cardan et sur lequel un dispositif (7) de fixation de la caméra est prévu d'un côté de la suspension à la cardan (3) et au moins deux dispositifs de fixation (17, 19) pour des contrepoids sont prévus de l'autre côté de la suspension à la cardan (3), de manière que leurs positions puissent être modifiées d'une manière réciproquement indépendante,
**caractérisé en ce que**
au moins l'un des dispositifs de fixation comporte au moins une plaque de support (19, 19', 19"), qui peut être enfichée et déplaçable sur des éléments coulissants (21), qui pour leur part sont montés sur le bras pendulaire (5), au moins une plaque de support (19, 19', 19") pouvant être montée avec au moins deux orientations sur les éléments coulissants (21) et étant prolongée d'une manière dissymétrique de sorte qu'on obtient, en fonction de l'orientation de la plaque de support (19, 19', 19") par rapport aux éléments coulissants (21) une orientation différente des contrepoids montés sur la plaque de support (19, 19', 19"), par rapport au bras pendulaire (5), et qu'au moins une plaque de support (19, 19', 19") est montée de manière à pouvoir pivoter par rapport aux éléments coulissants (21) et/ou de manière à pouvoir pivoter par rapport à une autre plaque de support (19, 19', 19").

2. Dispositif (1) d'équilibrage de poids pour une caméra selon la revendication 1, **caractérisé en ce que** le dispositif (7) de fixation de la caméra est prévu à une extrémité du bras pendulaire (5).

3. Dispositif (1) d'équilibrage de poids pour une caméra selon la revendication 1 ou 2, **caractérisé en ce qu'**au moins un dispositif de fixation (19, 19', 19") pour des contrepoids est prévu sur une extrémité du bras pendulaire (5).

4. Dispositif (1) d'équilibrage de poids pour une caméra selon l'une des revendications précédentes, **caractérisé en ce que** le dispositif (7) de fixation de la caméra et au moins un dispositif de fixation (19, 19', 19") pour des contrepoids sont prévus sur des extrémités opposées du bras pendulaire (5).

5. Dispositif (1) d'équilibrage de poids pour une caméra selon l'une des revendications précédentes, **caractérisé en ce qu'**un dispositif de fixation (17) pour un moniteur est prévu sur le bras pendulaire (5).

6. Dispositif (1) d'équilibre du poids d'une caméra selon la revendication 5, **caractérisé en ce que** le dispositif de fixation (17) pour le moniteur est prévu sur le côté de la suspension à la cardan (30), sur lequel est situé également au moins un dispositif de fixation (19, 19', 19") pour des contrepoids.

7. Dispositif (1) d'équilibrage de poids pour une caméra selon l'une des revendications 1 à 4, **caractérisé en ce que** le dispositif de fixation (17) pour le moniteur et au moins un dispositif de fixation (19, 19', 19") pour des contrepoids sont prévus sur côtés différents de la suspension à la cardan (3).

8. Dispositif (1) d'équilibrage de poids pour une caméra selon la revendication 7, **caractérisé en ce que** le dispositif de fixation (17) pour le moniteur est prévu sur le côté de la suspension à la cardan (3), sur lequel est également situé le dispositif (7) de fixation de la caméra.

9. Dispositif (1) d'équilibrage de poids pour une caméra selon l'une des revendications 5 à 8, **caractérisé en ce qu'**un dispositif de fixation pour des contrepoids est prévu sur le dispositif de fixation (17) pour le moniteur.

10. Dispositif (1) d'équilibrage de poids pour une caméra selon l'une des revendications précédentes, **caractérisé en ce que** les contrepoids sont présents sous la forme d'accumulateurs électriques.

11. Dispositif (1) d'équilibrage de poids pour une caméra selon la revendication 1, **caractérisé en ce que** les éléments coulissants (21) sont présents sous la forme de tubes coulissants.

12. Dispositif (1) d'équilibrage de poids pour une caméra selon la revendication 1, **caractérisé en ce que** les éléments coulissants (21) se présentent sous la forme de profilés, par exemple de profilés de section carrée.

13. Dispositif (1) d'équilibrage de poids pour une caméra selon l'une des revendications précédentes, **caractérisé en ce que** les éléments coulissants (21) sont disposés de manière à faire un angle fixe par rapport au bras pendulaire (5).

14. Dispositif (1) d'équilibrage de poids pour une caméra selon la revendication 13, **caractérisé en ce que** les éléments coulissants (21) s'étendent perpendiculairement au bras pendulaire (5).

15. Dispositif (1) d'équilibrage de poids pour une caméra selon l'une des revendications 1 à 12, **caractérisé en ce que** l'angle entre la plaque de support (19) et le bras pendulaire (5) est réglable, et notamment est réglable progressivement.

16. Dispositif (1) d'équilibrage de poids pour une caméra selon l'une des revendications précédentes, **caractérisé en ce qu'**au moins deux des dispositifs de fixation présents (19, 19', 19") pour des contrepoids sont agencés de façon identique.

17. Dispositif (1) d'équilibrage de poids pour une caméra selon l'une des revendications précédentes, **caractérisé en ce que** les contrepoids peuvent être montés sur les dispositifs de fixation (17, 19) par l'intermédiaire d'un système de liaison à serrage ou à pince.

18. Dispositif (1) d'équilibrage de poids pour une caméra selon l'une des revendications précédentes, **caractérisé en ce qu'**au moins deux des dispositifs de fixation (17, 19, 19', 19') sont disposés de manière à pouvoir pivoter et/ou à être déplaçables de telle sorte que les centres de gravité de contrepoids ou de moniteurs installés peuvent être disposés à une hauteur du bras pendulaire (5).
